# DEMANDE DE BREVET EUROPEEN

(11) **EP 1 615 436 A1**
(43) Date de publication de la demande: **11.01.2006**
(21) Numéro de dépôt: 04103161.8
(22) Date de dépôt: 05.07.2004
(51) Int. Cl.: H04N 7/167, H04N 5/00, H04L 29/06

(54) **Procédé et ensemble de traitement de données à accès conditionnel et dispositif de mise en forme de signaux**

(71) Demandeur: Nagracard S.A., 1033 Cheseaux-sur-Lausanne (CH)
(72) Inventeur: Bongard, Dominique, 1681 Billens (CH)
(74) Mandataire: Wenger, Joel-Théophile

(57) **Abrégé**

L'invention concerne un procédé de traitement de données à accès conditionnel au moyen d'un ensemble de traitement comportant au moins un dispositif de mise en forme (DMF) et au moins deux unités multimédia connectées localement au dispositif de mise en forme. Le procédé comporte les étapes d'envoi d'un numéro d'identification du dispositif de mise en forme à au moins l'une des unités multimédia (STB) localement connectée à ce dispositif, de comparaison du numéro d'identification (UA_{f}) envoyé avec un numéro d'identification mémorisé dans une mémoire de l'unité multimédia et de désactivation du traitement des données à accès conditionnel si la comparaison des numéros d'identification a donné un résultat négatif.

L'invention concerne également un ensemble de traitement de données à accès conditionnel pour la mise en oeuvre du procédé ci-dessus. Cet ensemble comporte un dispositif de mise en forme de signaux à destinations d'unités multimédia, ces signaux contenant lesdites données, cet ensemble comportant en outre au moins deux unités multimédia connectées localement au dispositif de mise en forme. L'ensemble est caractérisé en ce que le dispositif de mise en forme comporte un numéro d'identification, en ce que les unités multimédia comportent une mémoire destinée à mémoriser le numéro d'identification du dispositif de mise en forme et des moyens de comparaison entre le numéro d'identification du dispositif de mise en forme auquel elles sont connectées et le numéro d'identification mémorisé.

L'invention concerne en outre un dispositif de mise en forme de signaux unidirectionnels contenant des données à accès conditionnel agencé pour être connecté à au moins une unité multimédia, caractérisé en ce qu'il comprend un numéro d'identification unique mémorisé dans le dispositif, ainsi que des moyens de transmission de ce numéro d'identification à l'unité multimédia.

## Description

La présente invention concerne un procédé de traitement de données à accès conditionnel, utilisés notamment dans le domaine de la télévision à péage, ainsi qu'un ensemble de traitement destiné à la mise en oeuvre de ce procédé. Elle concerne également un dispositif de mise en forme de signaux, destinés notamment au domaine de la télévision à péage.

Généralement, pour pouvoir accéder à des données à accès conditionnel correspondant par exemple à des événements diffusés par des opérateurs de télévision à péage, tels que des films, des matchs de sports ou autre, il faut acquérir un abonnement et une unité multimédia, comprenant en général un décodeur et un module de sécurité. Certains abonnés souhaitent disposer de plusieurs décodeurs et de plusieurs modules de sécurité pour que plusieurs utilisateurs puissent accéder aux événements diffusés à partir de plusieurs téléviseurs disposés dans des pièces différentes de leur habitation.

Dans ce cas, le prix demandé pour les abonnements, décodeurs et/ou modules de sécurité supplémentaires est généralement inférieur au prix demandé pour le premier abonnement, décodeur et/ou module de sécurité. On cherche toutefois à éviter qu'un abonné n'acquière plusieurs ensembles décodeurs/modules de sécurité, en bénéficiant de la réduction de prix pour les ensembles supplémentaires et qu'il fasse bénéficier un tiers non abonné de cette réduction ou revende ces ensembles à un prix plus bas que le prix d'acquisition normal.

Une solution pour éviter ceci consiste à imposer des conditions de fonctionnement telles qu'un décodeur qui a été sorti de son environnement autorisé ne permette plus de déchiffrer un contenu, alors que ce même décodeur fonctionne de façon conventionnelle aussi longtemps qu'il reste dans son environnement. Ainsi, un décodeur revendu ou donné à un tiers ne pourra pas fonctionner.

Un système permettant d'atteindre en partie ce but est décrit dans le brevet européen publié sous le numéro EP 0 826 288. Ce brevet décrit un système de télévision à péage dans lequel un abonné dispose d'au moins deux décodeurs, chaque décodeur étant associé à une carte à puce destinée à permettre le déchiffrement du contenu envoyé sur les décodeurs liés au système de télévision. Chaque carte à puce contient un certain nombre d'informations qui permettent de l'identifier. Ces informations, appelées "données de chaînage", sont par exemple une signature, une clé ou un autre élément de détermination. Toutes les cartes liées au même abonné ont au moins une des données de chaînage en commun. Des cartes d'abonnés différents n'ont pas de données en commun.

Les cartes à puce de l'abonné ou au moins l'une d'entre elles, sont désactivées après une certaine durée d'utilisation. Le contenu envoyé sur le décodeur considéré ne peut alors plus être déchiffré. Une carte désactivée peut être réactivée si l'abonné dispose d'une autre carte encore active et d'un décodeur lié au même abonné. Pour réaliser ceci, le système selon cette invention fonctionne de la manière suivante. Les données liées à une carte active sont tout d'abord mémorisées dans le décodeur dans lequel cette carte est introduite. Lorsqu'une carte est désactivée, elle doit être introduite dans un décodeur associé à une carte active de l'abonné. Les données de chaînage telles que la signature, la clé, etc., mémorisées dans le décodeur, sont authentifiées avec les données de chaînage de la carte désactivée. Si ces données concordent, la carte est réactivée pour une certaine durée. Si ces données de chaînage ne concordent pas, la carte n'est pas réactivée.

Dans ce système, n'importe quel décodeur lié à une carte active de l'abonné peut permettre de réactiver une carte désactivée du même abonné. De ce fait, si des cartes de l'abonné ont été vendues à des personnes géographiquement proches de l'abonné initial, les personnes qui ont une carte désactivée peuvent introduire cette carte dans n'importe quel décodeur lié à une carte active de l'abonné pour refaire fonctionner la leur. L'effet dissuasif recherché par l'invention n'est donc que partiellement atteint. De plus, la réactivation doit être effectuée régulièrement et nécessite une manipulation de la part de l'utilisateur. De telles contraintes sont généralement peu appréciées par les utilisateurs "honnêtes". De plus, il existe un risque de fausse manoeuvre ou de perte de carte qui n'est pas négligeable.

Il existe en outre une manière simple d'éviter les contraintes liées au procédé de ce brevet. Il suffit en effet que l'acheteur d'un ensemble décodeur/carte à puce non autorisé acquière deux ensembles. Ainsi, il pourra toujours réactiver une carte lorsque celle-ci sera désactivée.

La présente invention se propose d'offrir une solution plus fiable, autonome et assurant que seuls les décodeurs réellement utilisés par un abonné légitime fonctionnent correctement et permettent le déchiffrement d'événements. De plus, cette solution ne nécessite aucune manipulation de la part de l'utilisateur honnête.

Selon cette invention, un décodeur et le module de sécurité qui y est associé fonctionnent de manière transparente pour l'utilisateur légitime, aussi longtemps qu'ils restent dans leur environnement "autorisé". Cela signifie que l'utilisateur n'aura pas besoin d'effectuer de manipulation, en particulier, aucun réactivation périodique du module de sécurité n'est nécessaire aussi longtemps que son décodeur et son module de sécurité restent dans leur environnement.

Par contre, en cas d'utilisation "inhabituelle", en particulier lorsque l'ensemble décodeur/module de sécurité a été revendu, le déchiffrement des données n'est pas autorisé et est arrêté automatiquement.

Les buts de l'invention sont atteints par un procédé de traitement de données à accès conditionnel au moyen d'un ensemble de traitement comportant au moins un dispositif de mise en forme et au moins deux unités multimédia connectées localement au dispositif de mise en forme, ce procédé comportant les étapes suivantes :
- envoi d'un numéro d'identification du dispositif de mise en forme à au moins l'une des unités multimédia localement connectée à ce dispositif de mise en forme;
- comparaison du numéro d'identification envoyé avec un numéro d'identification mémorisé dans une mémoire de ladite unité multimédia;
- désactivation du traitement des données à accès conditionnel si la comparaison des numéros d'identification a donné un résultat négatif.

Ces buts sont également atteints par un ensemble de traitement de données à accès conditionnel comportant un dispositif de mise en forme de signaux à destinations d'unités multimédia, ces signaux contenant lesdites données, cet ensemble comportant en outre au moins deux unités multimédia connectées localement au dispositif de mise en forme, caractérisé en ce que ce dispositif de mise en forme comporte un numéro d'identification, en ce que les unités multimédia comportent une mémoire destinée à mémoriser le numéro d'identification du dispositif de mise en forme et des moyens de comparaison entre le numéro d'identification du dispositif de mise en forme auquel elles sont connectées et le numéro d'identification mémorisé.

Les buts de l'invention sont en outre atteints par un dispositif de mise en forme de signaux unidirectionnels contenant des données à accès conditionnel agencé pour être connecté à au moins une unité multimédia, caractérisé en ce qu'il comprend un numéro d'identification unique mémorisé dans ledit dispositif, ainsi que des moyens de transmission de ce numéro d'identification à ladite unité multimédia.

L'invention se propose de lier les unités multimédia d'un abonné à un dispositif qui est unique par domicile. Ce dispositif unique comporte un numéro d'identification qui est introduit dans les unités multimédia et qui permet d'assurer que ces unités multimédia ne peuvent fonctionner que si elles sont connectées au dispositif unique pour lequel elles ont été initialisées. Lorsqu'une personne cherche à utiliser l'une des unités multimédia dans un autre environnement que celui pour lequel elle a été prévue, une comparaison entre le numéro d'identification du dispositif unique et du numéro mémorisé dans l'unité multimédia permet de déterminer que cette unité multimédia a été déplacée. L'accès aux données peut donc être empêché. Le dispositif unique par domicile peut notamment être un dispositif de mise en forme de signaux de télévision, une entrée réseau ou un élément compatible avec le protocole DiSEqC™ (Digital Satellite Equipment Control) ou d'autres types de protocoles. Ce dispositif peut recevoir des signaux unidirectionnels ou bidirectionnels. L'expression "signaux unidirectionnels" doit être comprise comme signifiant que l'entrée du dispositif ne fonctionne que comme récepteur. Par contre, la sortie peut très bien être "réceptrice" et "émettrice". Ceci est généralement le cas pour les dispositifs fonctionnant selon la norme DiSEqC. L'expression "signaux bidirectionnels" doit être comprise comme signifiant que l'entrée du dispositif peut fonctionner comme récepteur et comme émetteur. Ceci est le cas par exemple lorsque le dispositif est une entrée réseau ou un hub par exemple.

L'invention sera mieux comprise grâce à la description détaillée qui va suivre et qui se réfère aux dessins annexés donnés à titre d'exemple nullement limitatif, dans lesquels :
- la figure 1 est une vue schématique d'un premier mode de réalisation de l'ensemble selon l'invention; et
- la figure 2 illustre un deuxième mode de réalisation de l'ensemble selon l'invention.

En référence aux figures, l'ensemble selon l'invention comporte essentiellement un dispositif DMF de mise en forme de signaux unidirectionnels et au moins deux unités multimédia. Dans les exemples illustrés, l'ensemble comporte trois unités multimédia référencées STB1, STB2 et STB3. De façon bien connue, les unités multimédia comportent un module de sécurité SM qui peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Le dispositif de mise en forme reçoit des signaux unidirectionnels qui contiennent les données à accès conditionnel et qui sont, dans le domaine de la télévision à péage, les signaux diffusés par les opérateurs de télévision. Ces signaux peuvent être envoyés par satellite, par liaison terrestre ou par voie hertzienne. Après réception, les signaux sont traités de façon à les rendre utilisables par les unités multimédia. Ce traitement ou mise en forme comporte essentiellement une amplification et un filtrage. Il est à noter que la plupart des systèmes de réception de signaux de télévision comportent actuellement un tel dispositif de mise en forme. Dans le cadre de la télévision par satellite, ces dispositifs sont connus sous le nom de tête de réception ou DiSEqC™ (Digital Satellite Equipment Control). Ce dispositif de mise en forme selon l'invention contient un numéro d'identification unique UA_{f} mémorisé dans ce dispositif. Il comprend également des moyens de transmission de ce numéro d'identification aux unités multimédia.

Le procédé de l'invention comporte une phase d'initialisation qui est exécutée lorsqu'un abonné installe une unité multimédia reliée à son dispositif de mise en forme, et une phase de fonctionnement normal.

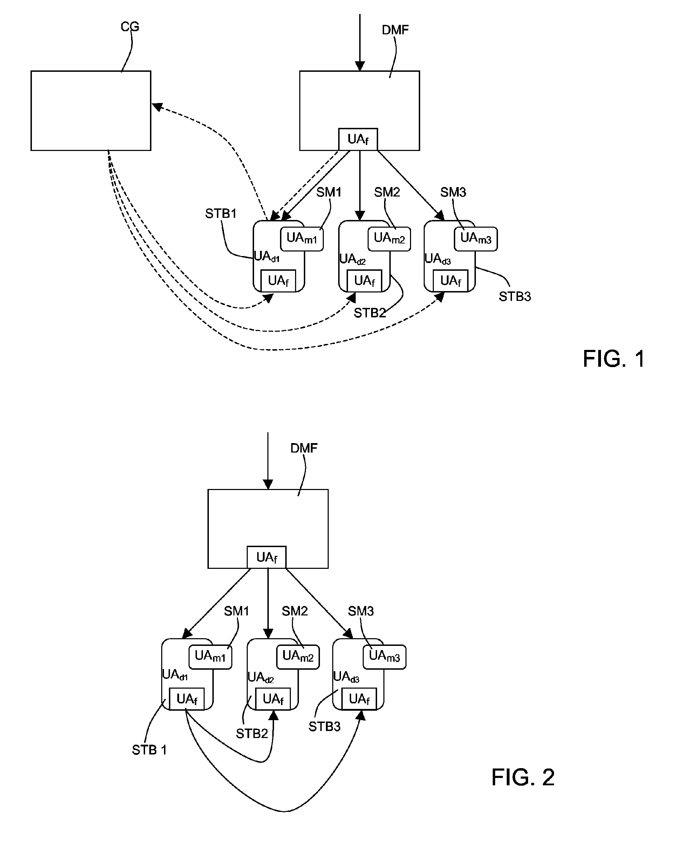

La phase d'initialisation tel que représenté par la figure 1 se déroule de la façon suivante. Lorsqu'un utilisateur acquiert une première unité multimédia STB1 ou un premier décodeur, celui-ci doit être connecté au dispositif DMF de mise en forme de signaux de façon à recevoir les signaux contenant les données à accès conditionnel. Pour la mise en service de l'unité multimédia, l'abonné doit encore contacter un centre de gestion CG, généralement par téléphone ou par Internet, ce qui est conventionnel avec les dispositifs existants actuellement. Le centre de gestion demande et mémorise un certain nombre d'informations relatives à chaque abonné. En particulier, le centre de gestion demande à l'abonné, le numéro d'identification UA_{f} du dispositif de mise en forme DMF, ce numéro pouvant être inscrit sur le dispositif lui-même, sur une documentation fournie avec le dispositif ou pouvant éventuellement être affiché sur un téléviseur connecté au dispositif de mise en forme. Les informations peuvent également être envoyées automatiquement par une ligne de retour.

A ce stade, le centre de gestion peut également demander un numéro d'identification unique UA_{d} du décodeur STB et un numéro d'identification UAₘ du module de sécurité SM de manière à apparier le dispositif de mise en forme, le décodeur et le module de sécurité. D'autres informations peuvent également être mémorisées, comme par exemple un nom d'abonné ainsi qu'un numéro d'abonné.

Lorsque le centre de gestion dispose de ces informations, il envoie au décodeur STB1, un message d'autorisation contenant le numéro d'identification UA_{f} du dispositif de mise en forme DMF. Celui-ci le mémorise soit directement dans le décodeur soit dans le module de sécurité qui y est apparié. Les flèches en traits interrompus sur la figure 1 correspondent à la phase d'initialisation.

Selon une variante telle qu'illustrée par la figure 2, la phase d'initialisation peut se dérouler sans passer par le centre de gestion. Lors de l'installation d'une première unité multimédia reliée à un dispositif de mise en forme, l'unité multimédia peut afficher une instruction à destination de l'utilisateur, lui demandant d'introduire manuellement le numéro d'identification de ce dispositif de mise en forme. Ce numéro peut être introduit par exemple au moyen d'une télécommande. Il est ensuite mémorisé dans l'unité multimédia, dans le décodeur et/ou dans le module de sécurité. On attribue à cette unité multimédia la fonction de maître. L'introduction manuelle du numéro d'identification est uniquement possible dans cette unité maître. On attribue aux autres unités multimédia de l'abonné la fonction d'esclave.

Il est également possible d'introduire le numéro d'identification du dispositif de mise en forme dans l'unité multimédia maître de façon automatique, par les moyens de communication du dispositif de mise en forme.

Il est entendu que cette opération ne peut s'effectuer qu'une fois afin d'éviter tout abus dans ce domaine. Néanmoins, le centre de gestion peut transmettre une commande d'effacement afin de permettre une reprogrammation si par exemple il a fallut changer le dispositif de mise en forme. Ce message d'effacement sera transmis à toutes les unités multimédia de l'abonné, le forçant à ré-exécuter la procédure telle que décrite ci-dessous.

Bien que l'invention ne soit pas en priorité destinée aux utilisateurs ne possédant qu'une seule unité multimédia, elle fonctionne également parfaitement dans ce cas.

En mode de fonctionnement normal, représenté par les flèches en traits continus sur la figure 1, l'unité multimédia peut interroger, par exemple à intervalle régulier ou lors de chaque demande d'accès à des données, le dispositif de mise en forme, en vue d'obtenir son numéro d'identification UA_{f}. Ce numéro d'identification est transmis aux unités multimédia par les moyens de transmission du dispositif de mise en forme.

L'unité multimédia dispose de moyens de comparaison agencés pour comparer le numéro d'identification tel que mémorisé lors de la phase d'initialisation avec le numéro d'identification reçu du dispositif de mise en forme. Si cette comparaison indique que les deux numéros d'identification sont différents, il est possible d'empêcher l'accès aux données à accès conditionnel.

De cette façon, il est possible de lier une unité multimédia à un dispositif de mise en forme spécifique, de manière à empêcher le déplacement de cette unité multimédia et son utilisation dans un domicile autre que celui dans lequel il est initialement prévu. Selon une variante de réalisation, il est également possible d'autoriser la connexion d'une unité multimédia à plusieurs dispositifs de mise en forme, par exemple deux, de façon à permettre à un abonné d'utiliser son unité multimédia dans sa résidence principale et sa résidence secondaire. Selon une réalisation concrète, il est possible qu'un seul dispositif de mise en forme contienne plusieurs numéros d'identification. Typiquement, il peut y avoir un numéro par sortie, le dispositif pouvant contenir 2, 4 ou 8 sorties par exemple. Dans ce cas, il est possible d'autoriser l'accès aux données en mémorisant tous les numéros d'identification d'un seul dispositif de mise en forme. Il est également possible d'empêcher l'accès aux données à partir d'une sortie, par exemple pour des raisons de contrôle parental.

Lorsque l'utilisateur acquiert une deuxième unité multimédia STB2, en bénéficiant par exemple d'une réduction de prix du fait qu'il dispose déjà d'une première unité STB1, le numéro d'identification UA_{f} du dispositif de mise en forme DMF tel qu'il a été mémorisé dans la première unité multimédia STB1, doit être introduit dans cette deuxième unité. Ceci peut essentiellement se faire de deux manières distinctes. L'une d'elles consiste à transmettre au centre de gestion, des indications permettant d'identifier le premier décodeur STB1. Ces indications sont par exemple le nom de l'abonné ainsi qu'un numéro de série qui peut être indiqué sur le décodeur lui-même. Ce numéro de série correspond à un numéro d'identification unique UA_{d} du décodeur. Le centre de gestion détermine, en fonction des informations qu'il a mémorisées, quel est le numéro d'identification UA_{f} du dispositif de mise en forme associé à cet abonné. Il l'envoie ensuite, sous forme de message d'autorisation EMM, à la deuxième unité multimédia STB2. Ce numéro est alors mémorisé dans l'unité multimédia, soit dans le décodeur, soit dans le module de sécurité.

La deuxième manière pour transmettre le numéro d'identification UA_{f} du dispositif de mise en forme à la deuxième unité multimédia STB2 consiste à utiliser le module de sécurité lié à la première unité multimédia. Ce module de sécurité peut mémoriser le numéro d'identification du dispositif de mise en forme, comme indiqué précédemment. Lors de l'initialisation de la seconde unité, il est demandé à l'abonné d'introduire le premier module de sécurité SM1 dans le deuxième décodeur STB2. Celui-ci obtient du premier module de sécurité SM1, le numéro d'identification UA_{f} du dispositif de mise en forme et le mémorise. L'abonné peut ensuite retirer le premier module de sécurité SM1 et réintroduire le deuxième module de sécurité SM2 dans le deuxième décodeur. Le numéro d'identification UA_{f} du dispositif de mise en forme peut être conservé dans le décodeur et/ou être transféré au module de sécurité. Dans ce cas, le transfert se passe au niveau local, sans transiter par le centre de gestion. Ce mode de réalisation est bien entendu possible uniquement si les modules de sécurité sont amovibles. Il est également possible de transférer le numéro d'identification mémorisé dans la première unité multimédia en déplaçant le module de sécurité SM2 de la deuxième unité multimédia dans la première unité multimédia.

En fonctionnement normal, lorsqu'un utilisateur souhaite avoir accès à des données à accès conditionnel à partir d'une deuxième unité multimédia STB2, le deuxième décodeur envoie tout d'abord une requête demandant le numéro d'identification UA_{f} au dispositif de mise en forme auquel il est connecté. Ce numéro d'identification est transmis au décodeur qui dispose de moyens de comparaison agencés pour comparer le numéro reçu avec le numéro d'identification mémorisé. Si ces numéros ne correspondent pas, cela signifie que le décodeur n'a pas été initialisé dans l'ensemble considéré. Il n'est donc pas autorisé à déchiffrer les données à accès conditionnel.

Lorsque l'abonné acquiert une troisième ou n^{ème} unité multimédia, l'initialisation se déroule de la même façon que pour la deuxième unité multimédia. Lorsque cette initialisation est terminée, l'unité multimédia peut fonctionner normalement, comme les autres unités.

Le dispositif de l'invention présente comme avantage qu'il permet de façon très simple de s'assurer que les unités multimédia qui ont initialement été prévues pour être associées à un dispositif de mise en forme et donc appartenir à un abonné, ne puisse pas être déplacées pour être utilisées chez un tiers non autorisé. De plus, il est possible d'utiliser un dispositif de mise en forme existant, tel que par exemple les appareils répondant à la norme connue sous l'acronyme DiSEqC.

## Revendications

1. Procédé de traitement de données à accès conditionnel au moyen d'un ensemble de traitement comportant au moins un dispositif de mise en forme (DMF) et au moins deux unités multimédia (STB) connectées localement au dispositif de mise en forme, ce procédé comportant les étapes suivantes :
• envoi d'un numéro d'identification (UA_{f}) du dispositif de mise en forme à au moins l'une des unités multimédia localement connectée à ce dispositif de mise en forme;
• comparaison du numéro d'identification envoyé avec un numéro d'identification mémorisé dans une mémoire de ladite unité multimédia;
• désactivation du traitement des données à accès conditionnel si la comparaison des numéros d'identification a donné un résultat négatif.

2. Procédé de traitement de données selon la revendication 1, **caractérisé en ce qu'**il comprend une l'étape suivante :
• transmission du numéro d'identification (UA_{f}) du dispositif de mise en forme vers les autres unités multimédia de manière sécurisée.

3. Procédé de traitement de données selon la revendication 2, **caractérisé en ce que** l'étape de transmission du numéro d'identification (UA_{f}) se fait par déplacement local d'un moyen de mémorisation temporaire contenant ledit numéro d'identification.

4. Procédé de traitement de données selon la revendication 3, **caractérisé en ce que** le moyen de mémorisation temporaire est un module de sécurité (SM).

5. Procédé de traitement de données selon la revendication 2, **caractérisé en ce que** l'étape de transmission du numéro d'identification (UA_{f}) se fait par transmission dudit numéro d'identification par un centre de gestion (CG).

6. Procédé de traitement de données selon la revendication 1, **caractérisé en ce qu'**il comprend une étape préalable d'initialisation comportant les étapes suivantes :
• transmission du numéro d'identification (UA_{f}) du dispositif de mise en forme à un centre de gestion (CG);
• envoi du numéro d'identification (UA_{f}) du dispositif de mise en forme par le centre de gestion (CG) aux unités multimédia (STB) localement connectées audit dispositif de mise en forme;
• mémorisation dudit numéro d'identification (UA_{f}) du dispositif de mise en forme dans les unités multimédia ayant reçu ce numéro d'identification du centre de gestion.

7. Procédé de traitement de données selon la revendication 6, **caractérisé en ce qu'**il comprend une étape préalable d'initialisation comportant les étapes suivantes :
• lecture électronique du numéro d'identification (UA_{f}) par l'unité multimédia disposant d'une voie de retour avec le centre de gestion (CG),
• transmission via cette voie de retour du numéro d'identification (UA_{f}) dudit dispositif de mise en forme.

8. Procédé de traitement de données selon la revendication 7, **caractérisé en ce que** le numéro d'identification (UA_{f}) du dispositif de mise en forme est envoyé aux unités multimédia sous la forme d'un message d'autorisation (EMM).

9. Ensemble de traitement de données à accès conditionnel comportant un dispositif (DMF) de mise en forme de signaux à destinations d'unités multimédia (STB), ces signaux contenant lesdites données, cet ensemble comportant en outre au moins deux unités multimédia connectées localement au dispositif de mise en forme, **caractérisé en ce que** ce dispositif de mise en forme comporte un numéro d'identification (UA_{f}), **en ce que** les unités multimédia comportent une mémoire destinée à mémoriser le numéro d'identification du dispositif de mise en forme et des moyens de comparaison entre le numéro d'identification du dispositif de mise en forme auquel elles sont connectées et le numéro d'identification mémorisé.

10. Ensemble selon la revendication 9, **caractérisé en ce que** le dispositif de mise en forme est un dispositif compatible avec le protocole DiSEqC.

11. Dispositif de mise en forme de signaux unidirectionnels contenant des données à accès conditionnel agencé pour être connecté à au moins une unité multimédia (STB), **caractérisé en ce qu'**il comprend un numéro d'identification (UA_{f}) unique mémorisé dans ledit dispositif, ainsi que des moyens de transmission de ce numéro d'identification à ladite unité multimédia.
